# EUROPÄISCHE PATENTSCHRIFT

(11) **EP 2 522 894 B1**
(45) Veröffentlichungstag und Bekanntmachung des Hinweises auf die Patenterteilung: **02.04.2014**
(21) Anmeldenummer: 11165978.5
(22) Anmeldetag: 13.05.2011
(51) Int. Cl.: F16L 37/107, F16L 37/248

(54) **Bajonettverschluss**
Bayonet lock
Fermeture à baïonnette

(43) Veröffentlichungstag der Anmeldung: 14.11.2012
(73) Patentinhaber: Georg Fischer JRG AG, 4450 Sissach (CH)
(72) Erfinder: Breyer, Markus, 78315 Radolfzell (DE)
(74) Vertreter: Fenner, Seraina

(56) Entgegenhaltungen:
- DE-U1- 20 120 157
- GB-A- 866 626
- JP-A- 2004 044 619

## Beschreibung

Die Erfindung betrifft einen Bajonettverschluss geeignet zur Verbindung von zwei Rohrleitungskomponenten, insbesondere von Anschlusselementen, wobei die zu verbindenden Rohrleitungskomponenten, ein zylinderförmiges Aufnahmeteil und die zweite Rohrleitungskomponente ein in das Aufnahmeteil einführbares Einsteckteil aufweist.

Rohrleitungen insbesondere im Trinkwasserbereich sind heute in vielen Fällen aus Kunststoff mit Ausnahme der Anschlusselemente wie bspw. Verteiler, Ventile usw. diese sind in der Regel aus einem metallischen Material hergestellt. Unabhängig davon ob das Anschlusselement aus einer Kupferlegierung, einem andern metallischen Werkstoff oder Kunststoff hergestellt ist, werden die Anschlusselemente üblicherweise mit der Rohrleitung verschraubt, wobei bei Kunststoffgewinden ein zusätzlich dichtendes Element wie bspw. ein O-Ring mit eingebaut wird, da das Kunststoffgewinde selbst nicht dichtend ist bzw. zur Dichtung nicht ausreicht. Um die Trinkwasserzulassung zu erreichen ist deshalb eine Systemanbindung der Anschlusselemente gemäss DVGW W 534 (Deutscher Vereins des Gas- und Wasserfachs) gefordert, die ein dichtendes Anschlussgewinde aufweisen, welches die Voraussetzungen der DIN-Norm EN 10226-1 erfüllt. Weiche eine Anbindung an das Trinkwassersystem mittels eines dichtenden Kunststoffgewindes nicht zulässt. Die Installation ist durch eine Gewindeverbindung sehr aufwendig, da das Gewinde vor dem Verschrauben mit einer dichtenden Masse versehen werden muss, um anschliessend dicht verschraubt werden zu können. Zudem wird zur Montage eines Anschlusselements, welches ein Gewinde zur Befestigung aufweist Werkzeug benötigt, sowie auch das Anziehmoment bei solchen Verbindungen immer unterschiedlich ausfällt, was ein weiterer Nachteil einer Verschraubung ist.

Des Weiteren existieren auch Verbindungen zwischen Anschlusselementen und Rohrleitungen die auf ein Gewinde verzichten und durch eine Art Schnellverschluss miteinander verbindbar sind. Die EP 1 106 896 B1 offenbart eine Steckverbindung die durch ein axiales Zusammenschieben der Komponenten einrastet und arretiert ist, wobei die Steckverbindung radial elastisch bzw. frei drehbar ist.

Die DE 10 2005 058 161A1 beschreibt einen Schnellverschluss für den Installationsbereich zum Verbinden eines Leitungselements und eines Anschlussstücks, wobei die Verbindung durch ein in eine Nut einrastenden Querschnitt veränderbaren Ringkörper erzeugt wird. Die verbindenden Teile sind dadurch axial miteinander fixiert, lassen sich aber radial zueinander frei verdrehen.

Der Nachteil an den beiden zuvor erwähnten Schriften liegt darin, dass die Verbindungen radial nicht positionierbar sind und somit keinen radialen Formschluss erzielen. Zudem ist beim Koppeln der Steckverbindung aus der EP 1 106 896 B1 nicht zu erkennen ob der Verschluss korrekt eingerastet ist. Eine weitere Schwachstelle der Steckverbindung besteht darin, dass durch den fehlenden radialen Formschluss sich die Verbindung durch Vibrationen ungewollt öffnen kann.

Die EP 2 228 582 A1 offenbart einen Flüssigkeitsverteiler aus Kunststoffen der mit Hilfe eines geschlitzten Rings mit der Rohrleitung verbunden ist. Nachteilig an dieser Lösung sind die hohen Herstellkosten sowie die unkomfortable Montageweise.

Die DE 201 20 157 offenbart eine einfache Bajonettverschlussanordnung.

Es ist Aufgabe der Erfindung eine Vorrichtung vorzuschlagen, die eine um 360° drehbare, einfache und schnell montierbare Verbindung zwischen Rohrleitung und Rohrleitungskomponente ermöglicht sowie eine sichere und dichte den Zulassungsvorschriften DVG W 534 entsprechende Verbindung darstellt, wie auch dem geforderten Druck- und Zugtest stand hält.

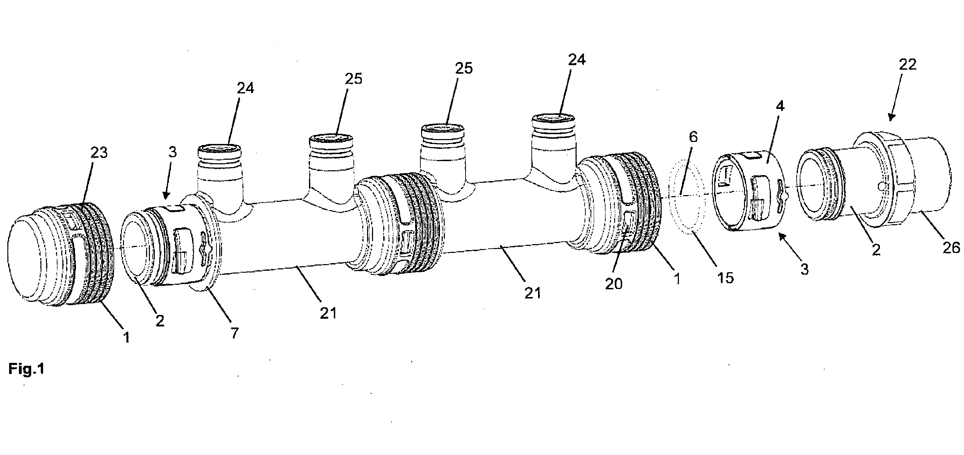

Bspw. ist das eine Ende eines Rohrleitungskomponenten, insbesondere eines Anschlusselements wie Verteiler, Ventile usw. als Einsteckteil ausgebildet, das heisst, dass die Aussenkontur so ausgebildet ist, dass der Klemmring darauf unverschiebbar angeordnet werden kann, anhand Fig. 1 wird der Aufbau eines Bajonettverschlusses verdeutlicht. Damit der Klemmring sich auf dem Einsteckteil nicht verschiebt, ist er in einer dem Klemmring bzw. Klemmsegment entsprechend breiten Nute angeordnet, welche den Klemmring in Richtung Längsachse fixiert. Um auch das Verdrehen des Klemmrings zu vermeiden, weist das Klemmsegment mindestens einen Rastzahn auf, der in eine Aussparung, welche am Aussendurchmesser des Einsteckteils angeordnet ist, greift, wodurch der Kopplungsvorgang, das heisst, das ineinanderschieben des Aufnahme- und Einsteckteils und das anschliessende Verdrehen, ermöglicht wird, ohne dass sich der Klemmring bzw, die Klemmsegmente verdrehen. Damit das Anschlusselement bspw. ein Verteiler sich individuell ausrichten lässt, weist das Einsteckteil mehrere Aussparungen entlang des Umfangs auf, wodurch sich die Klemmsegmente in unterschiedlicher Ausrichtung positionieren lassen und dennoch eine Verdreharretierung während des Verkoppelns ermöglichen. Zur Ausrichtung der Klemmsegmente bzw. des Bajonettverschlusses bedingt es der Flexibilität des Rastzahns, um dies zu erreichen befindet sich am Klemmsegment eine Nut, welche im Bereich des Rastzahns angeordnet ist. Durch die Nut wird ermöglicht, dass der Rastzahn bzw. seine Position sich leicht elastisch verändern lässt und dadurch das Verdrehen des Klemmrings ermöglicht. Der Rastzahn wird bei Erzeugen eines genügend grossen Drehmoments in die daneben liegende Aussparung gedreht, was beliebig oft wiederholt werden kann bis die Rohrleitungskomponente bzw. das Anschlusselement die gewünschte Position aufweist. Dieser Vorgang der Ausrichtung wird erst ausgeführt, wenn die Teile miteinander verkoppelt sind und der Bajonettverschluss verriegelt ist. Anschliessend kann die Rohrleitungskomponente in jede beliebige Richtung ausgerichtet werden. Wichtig bei dieser Vorrichtung ist jedoch, dass um eine anschliessende Ausrichtung zu erzielen, muss das Drehmoment, welches zum Ausrichten des Anschlusselements bzw. des Bajonettverschlusses aufgebracht wird, grösser ist als dasjenige welches zur Verriegelung wie auch zur Öffnung des Bajonettverschlusses dient. Dadurch lässt sich der Bajonettverschluss und demzufolge die Rohrleitungskomponente beliebig ausrichten bzw. gemäss den Aussparungen entlang des Umfangs des Einsteckteils, in die der Rastzahn einrastet. Was die Rohrleitungskomponente sowie den Bajonettverschluss um 360° drehbar macht.

Durch die partiell angebrachten Vertiefungen am Innendurchmesser des Aufnahmeteils ist gewährleistet, dass das Einsteckteil mit dem darauf vormontierten Klemmring in das Aufnahmeteil eingeführt werden kann. Der Aussendurchmesser der Rastnase des Klemmrings ist so ausgebildet, dass er geringfügig kleiner ist als der Innendurchmessers des Aufnahmeteils an den partiellen Vertiefungen, jedoch grösser als der Innendurchmesser des übrigen Bereichs des Aufnahmeteils.

Das Zusammenschieben des Aufnahmeteils und des Einsteckteils ist bis zum Anschlagflansch des Einsteckteils möglich. Beim Erreichen dieser Position müssen die Teile gegeneinander zu verdreht werden bis die Rastnase in die Rastöffnung eingedreht ist.

Eine bevorzugte Ausführungsform des Bajonettverschlusses besteht darin, den Klemmring aus mindestens zwei Klemmsegmenten herzustellen.

Der Klemmring der aus Klemmsegmenten besteht, weist jeweils pro Klemmsegment mindestens eine Rastnase auf, die im montierten Zustand in der Rastöffnung des Aufnahmeteils einrastet. Die Geometrie der Rastnase ist individuell auf die Grösse und die Anwendung des Verschlusses abzustimmen. Die Rastnase weist vorzugsweise eine Lasche auf, die sich während dem Eindrehen bzw. Verkoppeln elastisch verbiegt und sich dadurch ebenso in das Aufnahmeteil einführen lässt. Sie verhindert das unbeabsichtigte Öffnen in der verriegelten Stellung indem sie zum axialen Formschluss, der durch eine Bajonettverbindung gegeben ist, auch einen radialen Formschluss mit der Rastöffnung bildet. Um den Bajonettverschluss bewusst zu öffnen, muss die Lasche herunter gedrückt um so den radialen Formschluss zu überwinden und das Aufnahme- und Einsteckteil durch drehen und anschliessendes herausfahren wieder entkoppelt werden.

Eine weitere Ausgestaltung des Bajonettverschlusses besteht darin, dass ein Klemmsegment Verbindungslaschen, zur Verbindung der einzelnen Klemmsegmente zu einem Ring, aufweist. Durch das Zusammenfügen der Klemmsegmente greifen die Laschen in die dafür vorgesehenen Aufschiebeflächen am anschliessenden Klemmsegment und sind so ausgebildet, dass der Klemmring nach dem Zusammenfügen der Klemmsegmente in sich stabil ist und die Klemmsegmente leicht ineinander verhackt sind.

Die Erfindung zeichnet sich weiter darin aus, dass ein Klemmring aus identischen Klemmsegmenten zusammengesetzt ist. Für die Wirtschaftlichkeit eines solchen Verschlusses ist das ein massgebender Vorteil, da solche Teile vorzugsweise im Spritzgussverfahren hergestellt werden und es dadurch nur einer Spritzgussform bedarf, die bekannterweise sehr kostenintensiv in ihrer Herstellung sind.

Ein weiterer Vorteil ist, dass das Klemmsegment einen Kreissektor von über 180° erfasst, vorzugsweise weist der Kreissektor 210°-230° auf. Das ermöglicht einerseits eine einfach Montage, da dass auf dem Einsteckteil als erstes angebrachte Klemmsegment leicht fixiert ist und nicht konstant festgehalten werden muss und des Weiteren gibt die Überlappung der beiden Klemmsegmente dem Klemmring einen Zusammenhalt und stabilisiert den Ring in sich selbst.

Um eine optimale Positionierung sowie eine Stabilität des Klemmrings zu erzielen, greifen die am Klemmsegment angeordneten Laschen beim Zusammenfügen der Klemmsegmente zu einem Ring in die dafür vorgesehen Aufschiebefläche.

Die Klemmsegmente wie auch die Rohrleitungskomponenten sind aus Kunststoff hergestellt, vorzugsweise aus PPSU oder Polyamid. Wobei die Klemmsegmente und die Rohrleitungskomponenten nicht aus demselben Kunststoff hergestellt seine müssen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Explosionsansicht von montierten Rohrleitungskomponenten insbesondere zwei Verteilern die durch einen erfindungsgemässen Bajonettverschluss miteinander gekoppelt sind,
- Fig. 2: eine 3D-Ansicht eines Klemmsegments,
- Fig. 3: eine Frontansicht eines Klemmsegments
- Fig. 4: eine 3D-Ansicht eines geöffneten Bajonettverschlusses und
- Fig. 5: eine 3D-Ansicht eines geöffneten Bajonettverschlusses in einer weiteren Perspektive

In Fig. 1 wird unter anderem aufgezeigt, an welchen unterschiedlichen Rohrleitungskomponenten der erfindungsgemässe Bajonettverschluss anwendbar ist, wobei der Bajonettverschluss auch an weiteren Rohrleitungskomponenten Anwendung findet, die nicht dargestellt sind.

Das Aufnahmeteil 1 dient der Aufnahme des Einsteckteils 2. In Fig. 1 ist die Übergangsverschraubung 22 so ausgebildet, dass auf der einen Anschlussseite ein Gewinde 26 angeordnet ist und die andere Seite der Übergangsverschraubung 22 als Einsteckteil 2 eines Bajonettverschlusses ausgebildet ist. Vorzugsweise ist die Übergangsverschraubung 22 aus einem metallischen Werkstoff hergestellt, da die Zulassungsvorschrift eine metallische, gewindedichtende Anbindung einer Rohrleitungskomponente wie bspw. ein Verteiler 21 an das Rohrleitungssystem fordert und das auf diese Weise erfüllt wird, wenn die anschliessenden Rohrleitungskomponenten aus Kunststoff sind. Die weiteren Rohrleitungskomponente wie bspw. Verteiler 21 können durch einen Bajonettverschluss schnell an das System angekoppelt werden, sowie auch untereinander mit einem erfindungsgemässen Bajonettverschluss verbunden werden, was den grossen Vorteil mit sich bringt, dass keine weiteren Gewinde vorhanden sind die zusammengeschraubt und zuvor entsprechend vorbereitet werden müssen. Zur Abdichtung der Bajonettverschlusses dient eine Dichtung 15, vorzugsweise ein O-Ring. In Fig. 1 ist als zu verbindende Rohrleitungskompanente ein Verteiler 21 dargestellt, welcher an der einen Anschlussseite als Einsteckteil 2 ausgebildet ist, auf welches die Klemmsegmente 4 montiert bzw. vormontiert sind. Der Klemmring 3 besteht vorzugsweise aus zwei Klemmsegmenten 4 die miteinander gekoppelt und einen leichten Zusammenhalt aufweisen. Dadurch ist eine Vormontage am Einsteckteil 2 problemlos möglich.

Zudem befindet sich am Einsteckteil 2 eine Nut um eine Dichtung 15 am Umfang zu montieren. Vorzugsweise wird ein einfach zu montierender O-Ring verwendet. Durch die Dichtung 15 wird die Dichtheit des Bajonettverschlusses gewährleistet. Die andere Anschlussseite des Verteilers 21 ist als Aufnahmeteils 1 ausgebildet, in welches ein passendes Einsteckteil 2 mit darauf angeordnetem Klemmring 3 eingeführt werden kann um einen gewünschten Rohrleitungskomponenten anzuschliessen. In Fig. 1 ist als Ausführungsbeispiel ein zweiter Verteiler 21 am ersten Verteiler 21 angeschlossen. Der Bajonettverschluss ermöglicht eine kompakte Verbindungstechnik, sodass die Anschlussstutzen 25 die nebeneinander liegen aber jeweils an einem separaten Verteiler 21 angebaut sind, denselben Abstand zueinander aufweisen wie die Anschlussstutzen 24, 25 die am selben Verteiler 21 nebeneinander angeordnet sind, was für den Anschluss von Folgeelementen von einem grossen Vorteil ist.

Eine weitere Einsatzmöglichkeit des Bajonettverschlusses besteht darin, eine Abschlusskappe 23 als Aufnahmeteil 1 auszubilden. Wobei auch ein Abschlussstopfen der als Einsteckteil 2 ausgebildet ist, denkbar ist. Die Abschlusskappe 23 in Fig. 1, welche als Aufnahmeteil 1 ausgebildet ist, wird über das Einsteckteil 2 mit den darauf montierten Klemmsegmenten 4 geschoben und anschliessend verriegelt. In Fig. 1 sind einige Varianten von möglichen Rohrleitungskomponenten abgebildet die durch einen Bajonettverschluss verbindbar sind, das Sortiment ist jedoch unbegrenzt erweiterbar.

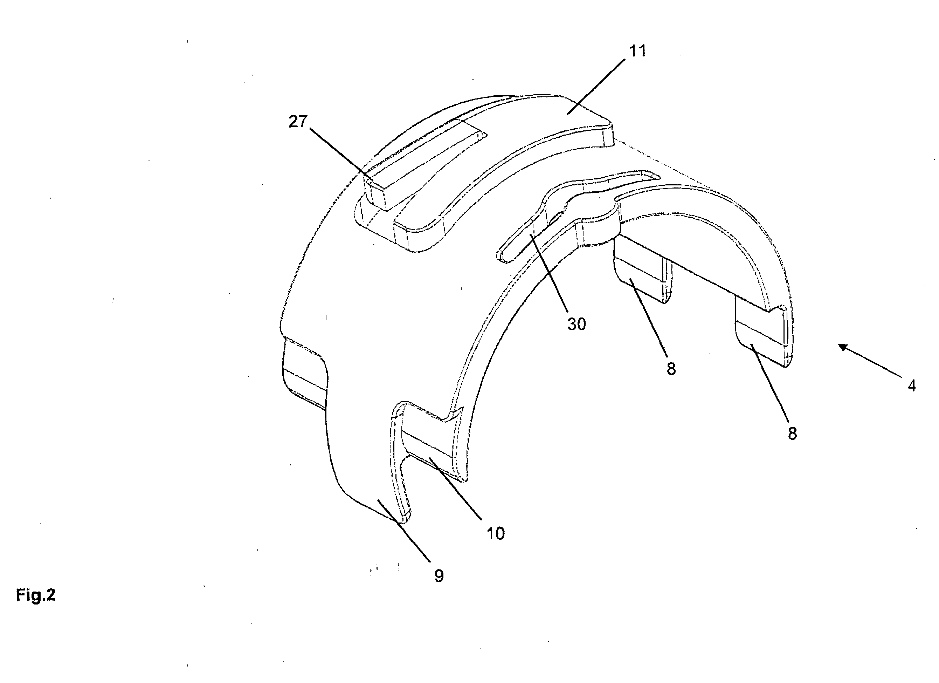

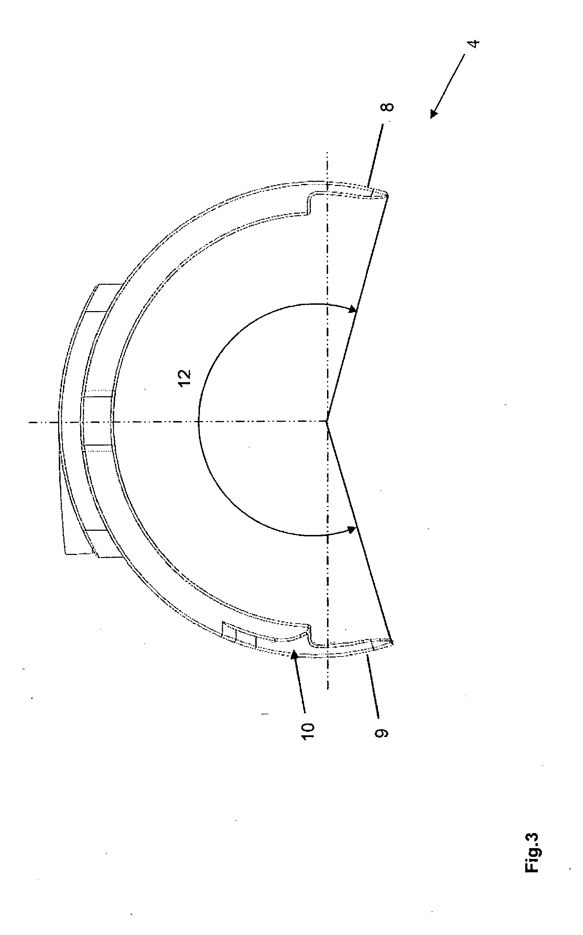

Am Klemmsegment 4, welches in Fig. 2 dargestellt ist, befinden sich an den beiden Enden Verbindungslaschen 8, 9. Beim Zusammenfügen der Klemmsegmente 4, vorzugsweise zwei, zu einem Klemmring 3 greifen die Laschen 8, 9 ineinander. Am einen Ende des Klemmsegments 4 befindet sich die Lasche 9 in der Mitte des Klemmsegments 4, am anderen Ende sind die Laschen 8 jeweils stirnseitig angeordnet und weisen eine Lücke zwischen sich auf, in die die Verbindungslasche 9 des zweiten Klemmsegments 4, welche mittig angeordnet ist, hinein passt. Diese Verbindungsart der Klemmsegmente 4 stellt nur eine mögliche Ausführungsform dar, andere Verbindungsvarianten für Klemmsegmente sind ebenfalls vorstellbar. Die Verbindungslaschen 8, 9 weisen eine geringere Wandstärke bzw. einen grösseren Innendurchmesser als der restliche Teil des Klemmsegment 4 auf. Das dient dazu um einen optimalen Übergang mit der am anderen Klemmsegmente 4 angeordneten Aufschiebefläche 10 zu erzielen. Des Weiteren weist das in Fig. 2 dargestellte Klemmsegmente 4 eine Rastnase 11 auf, die zum Einrasten in der im Aufnahmeteil 1 angeordneten Rastöffnung 20 dient. Vorzugsweise besitz jedes Klemmsegment 4 eine solche Rastnase 11. Die Geometrie einer Rastnase 11 ist individuell gestaltbar. Die vorliegende Ausführungsform der Rastnase 11 stellte eine geschlitzte Rastnase 11 dar. Die Lasche 27 lässt sich beim Zusammenführen der Teile elastisch verformen und ermöglicht dadurch das Einführen der Teile während des Verriegelungprozesses des Bajonettverschlusses. Nach dem Verdrehen bis zum Erreichen der Verriegelungsposition in der die Rastnase 11 in die Rastöffnung 20 einrastet verform sich die Lasche 27 wieder zurück in die ursprüngliche Position und bildet mit der Rastöffnung 20 eine formschlüssige Verbindung, die in der Fig. 2 ersichtlich ist. Durch ihr tangentiales Abstehen verhindert die Lasche 27 das ungewollte Öffnen des Bajonettverschlusses. Falls der Bajonettverschluss geöffnet werden muss, muss die Lasche 27 herunter gedrückt werden um so das Aufdrehen des Bajonettverschlusses zu ermöglichen. Das Klemmsegment 4 erstreckt sich über einen Kreissektor 12 der grösser als 180° ist, was in Fig. 3 erkennbar ist. Bevorzugt ist ein Kreissektor 12 der im Bereich zwischen 210° und 230° liegt. Dadurch ist das gegenseitige ineinandergreifen der Verbindungslaschen 8, 9 der Klemmsegmente 4 gewährleistet, sowie ein leichter Zusammenhalten des Klemmrings 3. Ein weiterer Vorteil ist, dass die Montage einfach auszuführen ist, da ein einzelnes Klemmsegment 4 durch die Grösse des Kreissektors 12 am Einsteckteil 2 haften bleibt.

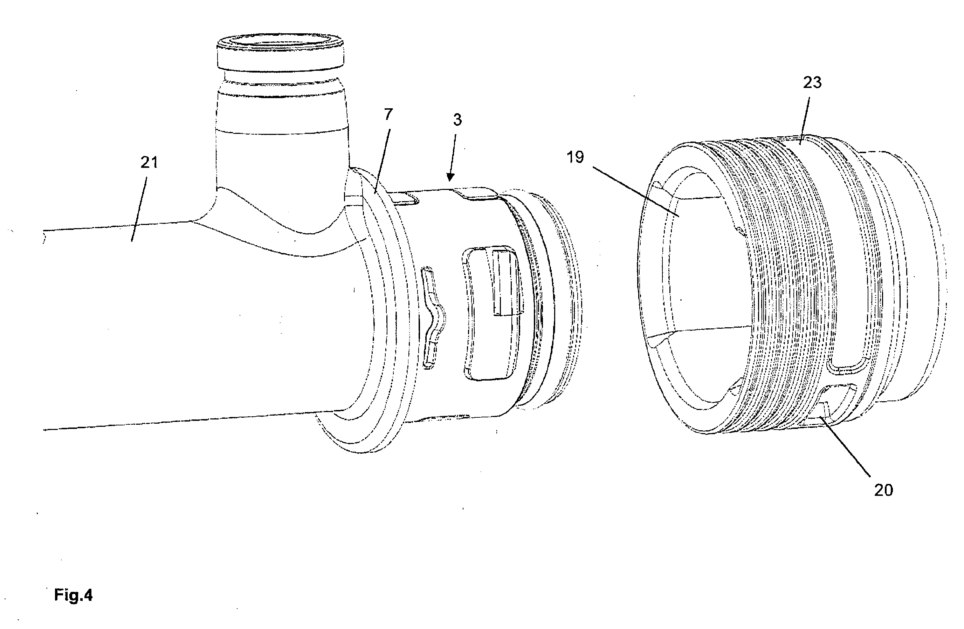

In Fig. 4 ist ersichtlich wie ein Bajonettverschluss zusammengeführt und anschliessend verriegelt wird. Als Rohrleitungskomponenten, an welchem ein Einsteckteil 2 angeordnet ist wird in Fig. 4 ein Verteiler 21 dargestellt, denkbar sind jedoch auch andere Komponente. Am Einsteckteil 2 sind die Klemmsegmente 4 zu einem Klemmring 3 vormontiert. Das Einsteckteil 2 mit montiertem Klemmring 3 muss vor dem Einschieben entsprechend zum Aufnahmeteil 1 ausgerichtet werden, sodass die Rastnase 11 in die Vertiefung 19 des Aufnahmeteils 1 zu liegen kommt, was das Einschieben des Einsteckteils 2 mit vormontiertem Klemmring 3 ermöglicht. Zum Einführen muss die Lasche 27 herunter gedrückt werden. Das Einschieben erfolgt bis zum Anstehen des Aufnahmeteils 1 am Anschlagflansch 7. Erst in dieser Position ist ein gegenseitiges Verdrehen des Aufnahmeteils 1 und des Einsteckteils 2 möglich, da es die Form der Vertiefung 19 erst in dieser Position zulässt. Durch das Verdrehen gegeneinander dreht sich die Rastnase 11 in die entsprechende Rastöffnung 20 in der sich die Lasche 27 in ihre ursprüngliche Form zurück entfalten kann, und dadurch das ungewollte Öffnen des Verschlusses vermieden wird. Das Verdrehen zur Verriegelung, ist durch die Form bzw. den Verlauf der Vertiefung 19 nur in eine Richtung zugelassen. Vorzugsweise sind die Vertiefungen 19 sowie die Rastöffnungen 20 so angeordnet, dass der Verdrehwinkel zur Verriegelung zwischen 30 und 50° liegt.

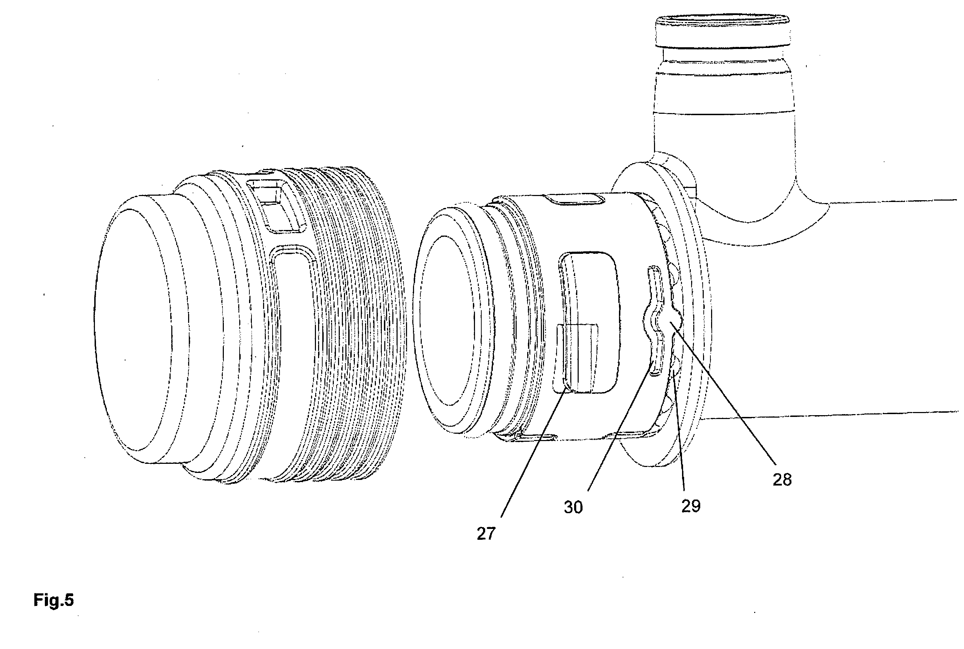

Fig. 5 zeigt einen geöffneten Bajonettverschluss in einer weiteren Perspektive, wodurch die Rasterung zur Positionierung der Klemmsegmente 4, zur Verdreharretierung der Klemmsegmente 4 beim Zusammenführen des Einsteckteils 2 und Aufnahmeteils 1 und zur anschliessenden Ausrichtung des Rohrleitungskomponenten sichtbar ist. Der Rastzahn 28 greift in die Aussparung 29 ein um einerseits den Klemmring 3 bzw. das jeweilige Klemmsegment 4 zu positionieren und um den Klemmring 3 so zu fixieren, dass die Montage des Rohrleitungskomponenten bzw. des Bajonettverschlusses ermöglicht wird ohne die Klemmsegmente 4 in ihrer Position zu Verdrehen. Durch die am Umfang des Einsteckteils 2 angeordneten Aussparungen 29, kann die Rohrleitungskomponente anschliessend ausgerichtet werden. Indem der verriegelte Bajonettverschluss bzw. das Einsteckteil 2 und das Aufnahmeteil 1 gegeneinander verdreht werden. Durch ein genügend grosses Drehmoment das aufgebracht wird, springt der Rastzahn 28 in die nächste Aussparung 29. Damit das nicht bereits während des Verriegelungsvorgangs geschieht, ist es wichtig, dass das dazu benötigte Drehmoment grösser ist als das Drehmoment, welches zur Verriegelung bzw. Entriegelung aufgewendet wird. Damit eine anschliessende Ausrichtung des Bajonettverschlusses bzw. der Rohrkomponente, die in beide Drehrichtungen erfolgen kann, erreicht wird, ist der Rastzahn 28 elastisch gestaltet. Das wird in der vorliegenden Ausführungsform dadurch erreicht, dass versetzt zum Rastzahn 28 in axialer Richtung eine Nut 30 angeordnet ist, die dem Rastzahn 28 die benötigte Elastizität gibt. Natürlich kann diese Elastizität des Rastzahns 28 auch durch andere Formgestaltung erzielt werden.

### Bezugszeichenliste

- 1: Aufnahmeteil
- 2: Einsteckteil
- 3: Klemmring
- 4: Klemmsegment
- 6: Mittelachse
- 7: Anschlagflansch
- 8: Aussenverbindungslasche
- 9: Zentrale Verbindungslasche
- 10: Aufschiebefläche
- 11: Rastnase
- 12: Kreissektor
- 15: Dichtung
- 19: Vertiefung
- 20: Rastöffnung
- 21: Verteiler
- 22: Übergangsverschraubung
- 23: Abschlussstopfen
- 24: Anschlussstutzen
- 25: Anschlussstutzen
- 26: Gewinde
- 27: Lasche
- 28: Rastzahn
- 29: Aussparung
- 30: Nut

## Patentansprüche

1. Bajonettverschluss geeignet zur Verbindung von zwei Rohrleitungskomponenten, insbesondere von Anschlusselementen, wobei die zu verbindenden Rohrleitungskomponenten, ein zylinderförmiges Aufnahmeteil (1) und die zweite Rohrleitungskomponente ein in das Aufnahmeteil (1) einführbares Einsteckteil (2) aufweist, enthaltend das Aufnahmeteil (1) und das Einsteckteil (2), wobei am Aussendurchmesser des Einsteckteils (2) ein Klemmring (3) angeordnet ist, auf welchen das Aufnahmeteil (1) aufschiebbar ist und durch das gegenseitige Verdrehen des Aufnahmeteils (1) und Einsteckteils (2) der Bajonettverschluss verriegelbar ist, wobei der Klemmring (3) aus mindestens zwei Klemmsegmenten (4) besteht, **dadurch gekennzeichnet, dass** das Klemmsegment (4) mindestens einen Rastzahn (28) aufweist, welcher mit entsprechender Rastposition am Einsteckteil (2) interagiert.

2. Bajonettverschluss nach Anspruch 1, **dadurch gekennzeichnet, dass** das Klemmsegment (4) mindestens eine Rastnase (11) aufweist.

3. Bajonettverschluss nach Anspruch 2, **dadurch gekennzeichnet, dass** die Rastnase (11) eine Lasche (27) aufweist, die in eingerasteter Position einen radialen Formschuss mit einer Rastöffnung (20) des Aufnahmeteils (1) bildet.

4. Bajonettverschluss nach einem der Ansprüche 1 bis 2, **dadurch gekennzeichnet, dass** das Klemmsegment (4) Verbindungslaschen (8, 9) zur Verbindung der einzelnen Klemmsegmente (4) zu einem Klemmring (3) aufweist.

5. Bajonettverschluss nach einem der vorangehenden Ansprüche, **dadurch gekennzeichnet, dass** die zu einem Klemmring (3) zusammengefügten Klemmsegmente (4) identisch sind.

6. Bajonettverschluss einem der vorangehenden Ansprüche, **dadurch gekennzeichnet, dass** das Klemmsegment (4) einen Kreissektor (12) von mehr als 180° aufweist, vorzugsweise im Bereich von 210° - 230° liegt.

7. Bajonettverschluss nach Anspruch 1, **dadurch gekennzeichnet, dass** der Rastzahn (28) elastisch ausgebildet ist.

8. Bajonettverschluss nach einem der Ansprüche 1 oder 7, **dadurch gekennzeichnet, dass** der Rastzahn (28) in eine Aussparung (29), welche am Umfang des Einsteckteils (2) angeordnet ist, greift.

9. Bajonettverschluss nach Anspruch 8, **dadurch gekennzeichnet, dass** mehrere Aussparungen (29) zur individuellen Ausrichtung des Bajonettverschlusses bzw. der Rohrleitungskomponenten entlang des Umfangs des Einsteckteils (2) angeordnet sind.

10. Bajonettverschluss nach einem der vorangehenden Ansprüche, **dadurch gekennzeichnet, dass** das Klemmsegment (4) aus Kunststoff hergestellt ist, vorzugsweise aus PPSU oder Polyamid.

11. Bajonettverschluss nach einem der vorangehenden Ansprüche, **dadurch gekennzeichnet, dass** die Rohrkomponenten Anschlusselemente vorzugsweise Verteiler (21) sind.

12. Bajonettverschluss nach einem der vorangehenden Ansprüche, **dadurch gekennzeichnet, dass** die Rohrkomponenten aus Kunststoff hergestellt sind, vorzugsweise aus PPSU oder Polyamid.

## Claims

1. Bayonet fastening suitable for connecting two pipeline components, in particular connecting elements, wherein the pipeline components to be connected comprise a cylindrical receiving part (1) and the second pipeline component has an insertion part (2) which can be inserted in the receiving part (1), containing the receiving part (1) and the insertion part (2), wherein a clamping ring (3), onto which the receiving part (1) can be slipped, is arranged on the outside diameter of the insertion part (2) and the bayonet fastening is lockable by rotating the receiving part (1) and the insertion part (2) in relation to one another wherein the clamping ring (3) consists of at least two clamping segments (4), **characterized in that** the clamping segment (4) has at least one latching tooth (28) which interacts with the corresponding latching position on the insertion part (2).

2. Bayonet fastening according to Claim 1, **characterized in that** the clamping segment (4) has at least one latching lug (11).

3. Bayonet fastening according to Claim 2, **characterized in that** the latching lug (11) has a bar (27) which, in the latched-in position, has a positive radial fit with a latching opening (20) of the receiving part (1).

4. Bayonet fastening according to one of Claims 1 to 2, **characterized in that** the clamping segment (4) has connecting bars (8, 9) for connecting the individual clamping segments (4) to form a clamping ring (3).

5. Bayonet fastening according to one of the preceding claims, **characterized in that** the clamping segments (4), which are joined together to form a clamping ring (3), are identical.

6. Bayonet fastening according to one of the preceding claims, **characterized in that** the clamping segment (4) has a circle sector (12) in excess of 180°, which preferably lies within the range of 210° - 230°.

7. Bayonet fastening according to Claim 1, **characterized in that** the latching tooth (28) is realized in a resilient manner.

8. Bayonet fastening according to either of Claims 1 or 7, **characterized in that** the latching tooth (28) extends into a recess (29) which is arranged on the circumference of the insertion part (2).

9. Bayonet fastening according to Claim 8, **characterized in that** several recesses (29) are arranged along the circumference of the insertion part (2) for aligning the bayonet fastening or the pipeline components in an individual manner.

10. Bayonet fastening according to one of the preceding claims, **characterized in that** the clamping segment (4) is produced from plastics material, preferably from PPSU or polyamide.

11. Bayonet fastening according to one of the preceding claims, **characterized in that** the pipeline components are connecting elements, preferably distributors (21).

12. Bayonet fastening according to one of the preceding claims, **characterized in that** the pipeline components are produced from plastics material, preferably from PPSU or polyamide.

## Revendications

1. Fermeture à baïonnette appropriée pour la connexion de deux composants de conduite tubulaire, en particulier d'éléments de raccordement, les composants de conduite tubulaire à raccorder comprenant une partie de réception cylindrique (1) et le deuxième composant de conduite tubulaire présente une partie d'enfichage (2) pouvant être introduite dans la partie de réception (1), contenant la partie de réception (1) et la partie d'enfichage (2), une bague de serrage (3) étant disposée sur le diamètre extérieur de la partie d'enfichage (2), sur laquelle la partie de réception (1) peut être poussée et peut être verrouillée par rotation mutuelle de la partie de réception (1) et de la partie d'enfichage (2) de la fermeture à baïonnette, la bague de serrage (3) se composant d'au moins deux segments de serrage (4), **caractérisée en ce que** le segment de serrage (4) présente au moins une denture d'encliquetage (28) qui coopère avec une position d'encliquetage correspondante sur la partie d'enfichage (2).

2. Fermeture à baïonnette selon la revendication 1, **caractérisée en ce que** le segment de serrage (4) présente au moins un ergot d'encliquetage (11).

3. Fermeture à baïonnette selon la revendication 2, **caractérisée en ce que** l'ergot d'encliquetage (11) présente une patte (27) qui, dans la position encliquetée, forme un engagement par correspondance géométrique radial avec une ouverture d'encliquetage (20) de la partie de réception (1).

4. Fermeture à baïonnette selon l'une quelconque des revendications 1 à 2, **caractérisée en ce que** le segment de serrage (4) présente des pattes de connexion (8, 9) pour la connexion des segments de serrage individuels (4) pour former une bague de serrage (3).

5. Fermeture à baïonnette selon l'une quelconque des revendications précédentes, **caractérisée en ce que** les segments de serrage (4) assemblés pour former une bague de serrage (3) sont identiques.

6. Fermeture à baïonnette selon l'une quelconque des revendications précédentes, **caractérisée en ce que** le segment de serrage (4) présente un secteur de cercle (12) de plus de 180°, de préférence se situant dans la plage de 210° à 230°.

7. Fermeture à baïonnette selon la revendication 1, **caractérisée en ce que** la dent d'encliquetage (28) est réalisée sous forme élastique.

8. Fermeture à baïonnette selon l'une quelconque des revendications 1 ou 7, **caractérisée en ce que** la dent d'encliquetage (28) vient en prise dans un évidement (29) disposé sur la périphérie de la partie d'enfichage (2).

9. Fermeture à baïonnette selon la revendication 8, **caractérisée en ce que** plusieurs évidements (29) sont disposés en vue de l'orientation individuelle de la fermeture à baïonnette ou des composants de conduite tubulaire le long de la périphérie de la partie d'enfichage (2).

10. Fermeture à baïonnette selon l'une quelconque des revendications précédentes, **caractérisée en ce que** le segment de serrage (4) est fabriqué en plastique, de préférence en PPSU ou en polyamide.

11. Fermeture à baïonnette selon l'une quelconque des revendications précédentes, **caractérisée en ce que** les composants tubulaires sont des éléments de raccordement, de préférence des distributeurs (21) .

12. Fermeture à baïonnette selon l'une quelconque des revendications précédentes, **caractérisée en ce que** les composants tubulaires sont fabriqués en plastique, de préférence en PPSU ou en polyamide.
